# FASCICULE DE BREVET EUROPEEN

(11) **EP 4 045 409 B1**
(45) Date de publication et mention de la délivrance du brevet: **29.11.2023**
(21) Numéro de dépôt: 20797832.1
(22) Date de dépôt: 12.10.2020
(51) Int. Cl.: B64D 29/00, B64D 33/04, F02K 1/00, F02K 1/10

(54) **SYSTÈME PROPULSIF POUR UN AÉRONEF**
ANTRIEBSSYSTEM FÜR EIN FLUGZEUG
PROPULSION SYSTEM FOR AN AIRCRAFT

(30) Priorité: 16.10.2019 FR 1911538
(43) Date de publication de la demande: 24.08.2022
(73) Titulaire: SAFRAN, 75015 Paris (FR); Safran Helicopter Engines, 64510 Bordes (FR)
(72) Inventeur: BESSE, Jean-Louis Robert Guy, 77550 MOISSY-CRAMAYEL (FR); MALDONADO, Ye-Bonne Karina, 77550 MOISSY-CRAMAYEL (FR)
(74) Mandataire: Gevers & Orès
(86) Numéro de dépôt international: PCT/FR2020/051799
(87) Numéro de publication internationale: WO 2021/074515

(56) Documents cités:
- EP-A2- 2 184 481
- FR-A1- 2 310 471
- US-A- 5 328 098
- US-A1- 2011 030 380

## Description

### DOMAINE TECHNIQUE

La présente invention concerne le domaine des systèmes propulsifs pour aéronef. Elle se rapporte notamment à un système propulsif capable de fournir une composante de poussée latérale.

La présente invention concerne également un aéronef comportant un tel système propulsif.

### TECHNIQUE ANTÉRIEURE

L'arrière-plan technique comprend notamment les documents US 2011/030380 A1, EP 2184481 A2, US 5328098 Alet FR 2310471 A1.

Un système propulsif pour aéronef comporte au moins un rotor ou une hélice comportant une pluralité de pales montées sur un arbre tournant.

Il existe des aéronefs, et notamment des Aéronefs à Décollage et Atterrissage Verticaux (ADAV ou VTOL acronyme pour « *Vertical Take-Off and Landing* » en langue anglaise), présentant des systèmes propulsifs à rotors simples lorsqu'ils ne comportent qu'un seul rotor ou contra rotatifs lorsqu'ils comportent des rotors regroupés par paire tournant en sens opposés.

Ces systèmes propulsifs sont soit à rotors carénés (le rotor est alors entouré d'un carénage de nacelle annulaire), soit à rotors libres, les systèmes propulsifs et notamment les rotors (libres ou carénés) pouvant être montés sur un arbre de pivotement permettant l'orientation des systèmes propulsifs et donc des rotors entre une position verticale et une position horizontale, par exemple l'orientation à la verticale pour un décollage ou un atterrissage vertical et l'orientation à l'horizontale pour le vol d'avancement ou mode avion.

Les rotors carénés présentent plusieurs avantages intéressants, tels que :
- une importante diminution de la signature sonore du rotor en émission directe ;
- une protection des pales du rotor vis-à-vis des obstacles alentours ;
- une amélioration des performances du rotor, notamment en vol stationnaire de l'aéronef ou à faible vitesse d'avancement.

Cependant, les aéronefs VTOL à rotors carénés, notamment en vol stationnaire, n'ont pas la même manoeuvrabilité que les hélicoptères classiques.

Pour des hélicoptères classiques, des corrections d'altitude et de placement peuvent être réalisées, dans le trièdre de référence en normes aéronautiques X, Y, Z, par :
- des corrections autour de l'axe de roulis X (axe de rotation de l'hélicoptère autour de son axe longitudinal) par une action à gauche ou à droite sur le pas cyclique (agissant sur l'orientation de la poussée du rotor, ici dans un plan perpendiculaire à l'axe X) ;
- des corrections autour de l'axe de tangage Y (axe de de l'hélicoptère autour de son axe transversal) par une action en avant (à piquer) ou en arrière (à cabrer) sur le pas cyclique (agissant sur l'orientation de la poussée du rotor, ici dans un plan perpendiculaire à l'axe Y) ;
- des corrections autour de l'axe de lacet Z (axe de rotation dans un plan horizontal de l'hélicoptère autour de son axe vertical) par action sur le palonnier (agissant sur la poussée du rotor anti-couple de l'hélicoptère) ;
- des corrections en translation longitudinale selon l'axe X du trièdre de référence en normes aéronautiques (axe longitudinal) par une commande du pas cyclique/collectif (agissant sur l'orientation de la poussée du rotor, ici vers l'avant ou vers l'arrière) ;
- des corrections en translation latérale selon l'axe Y du trièdre de référence en normes aéronautiques (axe transversal) par une commande du pas cyclique/collectif, (agissant sur l'orientation de la poussée du rotor, ici vers la droite ou vers la gauche) ;
- des corrections en translation verticale selon l'axe Z de référence par une commande du pas collectif vers le haut, vers le bas (agissant sur la poussée du rotor, mise pas : commande tirée vers le haut).

Bien entendu, des corrections coordonnées du pas collectif et du palonnier, bien connues des pilotes, sont à apporter pour contrer les effets induits de perte de composante de portance et d'effet de couple.

Pour les aéronefs VTOL à rotors carénés, les corrections de positionnement, ou les corrections permettant de contrer des rafales de vent en vol stationnaire, sont généralement complexes et rendent inconfortable le vol pour les passagers de l'aéronef. Par exemple, dans le cas d'un quadrotors (i.e. un aéronef à quatre rotors), afin d'effectuer une correction dans la direction de l'axe X de référence, il est nécessaire de faire basculer l'aéronef vers l'avant autour de l'axe Y de référence (selon l'axe de tangage), puis d'effectuer une correction de la position atteinte (par exemple pour contrer une rafale de vent) et de revenir rapidement à une position neutre, dite « à plat ». De même, afin d'effectuer une correction dans la direction de l'axe Y de référence, il est nécessaire d'incliner, c'est-à-dire de faire rouler, l'aéronef vers et autour de l'axe X de référence (selon l'axe de roulis), puis d'effectuer une correction de la position atteinte et de revenir rapidement à une position neutre. Avec un tel quadrotors, lors d'un transport de passagers, ces derniers peuvent ressentir des balancements avant/arrière et/ou droite/gauche.

Il a été proposé un moteur de turbine à gaz comprenant une tuyère bidimensionnelle comportant un panneau flexible apte à changer de position, sous l'action d'un vérin, de manière à réguler l'échappement du moteur.

Il a également été proposé des moteurs de turbine à gaz comprenant des tuyères à géométries variables, de sorte à faire varier une surface de sortie de la tuyère.

Le document US 2011/030380 A1 décrit un système propulsif comprenant un carénage de nacelle dont un tronçon est réalisé en matériau à mémoire de forme (SMA) actionnable par des actionneurs en fonction de la température.

Ainsi, ces solutions proposées proposent des tuyères dans lesquelles est mise en place la technologie de poussée vectorielle en deux dimensions.

Toutefois, aucune de ces solutions proposées ne propose de mise en place de la technologie de poussée vectorielle en trois dimensions dans des carénages de nacelles de systèmes propulsifs, notamment en mode VTOL à rotors, guidant le flux issu des dits rotors.

Il existe donc un besoin de fournir une solution simple et efficace aux problèmes évoqués ci-dessus.

Un but de la présente invention est de proposer une solution permettant d'améliorer la manoeuvrabilité des aéronefs de type VTOL, tout en diminuant les impacts de masse et de pertes aérodynamiques associés aux commandes de vol.

En particulier, l'invention propose d'améliorer la manoeuvrabilité des aéronefs de type VTOL en fournissant un système propulsif capable de fournir une composante de poussée latéralement à l'axe des rotors.

### RÉSUMÉ DE L'INVENTION

À cet effet, l'invention concerne un système propulsif pour un aéronef, comprenant au moins un rotor et un carénage de nacelle s'étendant autour dudit au moins un rotor par rapport à un axe de rotation dudit rotor, ce carénage de nacelle comprenant un tronçon amont formant une section d'entrée du carénage de nacelle et un tronçon aval dont une extrémité aval forme une section de sortie du carénage de nacelle ; et caractérisé en ce que le tronçon aval comprend une paroi radialement interne et une paroi radialement externe réalisées dans un matériau déformable à mémoire de forme, et en ce que l'extrémité aval formant section de sortie comporte une pluralité d'actionneurs pneumatiques ou hydrauliques, les actionneurs s'étendant dans des secteurs angulaires consécutifs différents autour dudit axe de rotation, chaque actionneur étant actionnable indépendamment des autres actionneurs et étant configuré pour se déformer dans une direction qui est radiale par rapport à l'axe de rotation et qui est centrée angulairement par rapport au secteur angulaire sur lequel il s'étend, sous l'effet d'une pression de commande prédéterminée.

Le système propulsif selon l'invention peut être à rotor simple ou à rotors contra rotatifs, installés dans une nacelle fixe ou pivotante, à axe de pivotement traversant ou déporté.

Selon l'invention, le carénage est constitué à sa sortie d'air d'un matériau semidéformable à mémoire de forme et d'une pluralité d'actionneurs pneumatique ou hydraulique configurés pour faire varier automatiquement la forme de la nacelle et de là, l'orientation du flux d'air en sortie de celle-ci, afin de manoeuvrer l'aéronef sur lequel ladite nacelle est installée.

Le profil du carénage a avantageusement une partie avale semi rigide dont les dimensions et la forme de la section de sortie en bord de fuite peuvent varier, de sorte que la section de sortie en bord de fuite peut être orientée latéralement sous l'effet d'un dispositif commandé, pour former un tube de courant produisant une poussée avec une composante latérale, dite poussée vectorielle ou orientée.

Le système propulsif selon l'invention permet ainsi d'améliorer la manoeuvrabilité de l'aéronef dans lequel il est installé, notamment lors des manoeuvres à faible vitesse d'avancement, comme les décollages et les atterrissages, tout en minimisant les nuisances sonores induites par le rotor du système propulsif et en assurant une sécurité de ce rotor par la présence du carénage de nacelle.

En effet, la forme du carénage est adaptée de façon continue en fonction de la déviation de la poussée commandée pour obtenir un placement précis de l'aéronef. Le profil du carénage peut donc être orienté latéralement en fonction des contraintes mécaniques du vol recherchées en mode VTOL, de sorte à produire une composante de poussée perpendiculaire à l'axe rotor.

Le système d'actionneurs pneumatique peut avantageusement être verrouillé, par exemple par une valve à ouverture/fermeture commandées, une fois la pression de commande établie, et donc ne pas consommer d'énergie une fois activé.

Lors des phases de vol en mode avion, le système d'actionneurs, qui est utile lors des phases à faible vitesse d'avancement, peut être désactivé.

Chaque actionneur peut avoir une forme générale de portion torique. Les actionneurs peuvent s'étendre dans des secteurs angulaires consécutifs différents autour dudit axe de rotation de sorte que l'ensemble des actionneurs a une forme générale de tore.

Selon un exemple de réalisation, chaque actionneur est réalisé en matériau élastique rigidifié radialement incluant des fibres.

Selon un autre exemple de réalisation, chaque actionneur comprend une vessie en forme générale de portion torique en matériau souple enchâssée dans un ressort spiral. Chaque actionneur peut être encastré à une extrémité dans un support rigide. En particulier, chaque ressort spiral peut être encastré à une extrémité dans un support rigide, et chaque vessie peut être encastrée à une extrémité dans un support rigide. Chaque vessie peut comprendre une valve d'entrée configurée pour recevoir la pression de commande prédéterminée. La valve d'entrée peut être une électrovalve. La pluralité d'actionneurs peut comporter deux actionneurs ayant une forme générale semi-torique.

Avantageusement, le système propulsif comprend en outre des pontets de rigidification reliant les parois radialement interne et radialement externe du tronçon aval et permettant d'assurer un écart sensiblement constant entre les parois radialement interne et radialement externe du tronçon aval.

Le carénage de nacelle peut comprendre un tronçon amont formant une section d'entrée du carénage de nacelle et un tronçon intermédiaire reliant les tronçons amont et aval.

Avantageusement, le tronçon intermédiaire est rigide et est relié par au moins un mât à un moteur du système propulsif. Cela procure au carénage de nacelle du système propulsif une structure rigide pouvant assurer une fonction de blindage.

La présente invention concerne également un aéronef caractérisé en ce qu'il comporte au moins un système propulsif présentant au moins l'une quelconque des caractéristiques susmentionnées, le système propulsif étant monté pivotant sur l'aéronef par l'intermédiaire d'un arbre de pivotement déporté ou traversant par rapport au rotor.

### BRÈVE DESCRIPTION DES DESSINS

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
[Fig. 1A] la figure 1A est une vue schématique en perspective d'un premier exemple de réalisation d'un système propulsif montré avec une nacelle montée sur un axe de pivotement déporté, le système propulsif étant en position horizontale ;
[Fig. 1B] la figure 1B est une vue analogue à la figure 1A, illustrant le système propulsif en position verticale ;
[Fig. 1C] la figure 1C est une vue schématique en perspective d'un second exemple de réalisation d'un système propulsif montré avec une nacelle montée sur un axe de pivotement traversant, le système propulsif étant en position horizontale ;
[Fig. 2] la figure 2 est une vue schématique en coupe longitudinale du système propulsif selon l'invention avec son tronçon aval de carénage de nacelle en mode poussée symétrique, c'est-à-dire poussée axiale ;
[Fig. 3-4] les figures 3 et 4 sont des vues analogues à la figure 2 du système propulsif selon l'invention avec son tronçon aval de carénage de nacelle en mode poussée dissymétrique ;
[Fig. 5A-5B] les figures 5A et 5B sont des vues schématiques respectivement arrière et de côté, d'un exemple de réalisation des actionneurs semi-toriques selon l'invention, en mode poussée axiale ;
[Fig. 6A-6B] les figures 6A et 6B sont des vues schématiques respectivement arrière et de côté, d'un exemple de réalisation des actionneurs semi-toriques selon l'invention, en mode poussée dissymétrique ;
[Fig. 7A-7B] les figures 7A et 7B sont des vues schématiques respectivement arrière et de côté, d'un autre exemple de réalisation des actionneurs semi-toriques selon l'invention, en mode poussée dissymétrique.

Les éléments ayant les mêmes fonctions dans les différentes mises en oeuvre ont les mêmes références dans les figures.

### DESCRIPTION DES MODES DE RÉALISATION

Dans le présent exposé, les termes « axial », « interne » et « externe » sont utilisés en référence à l'axe de rotation du système propulsif selon l'invention.

Un système propulsif est généralement constitué :
- d'une nacelle ;
- d'un moteur et de son système de commande et de contrôle ;
- et, dans le cas d'une propulsion à hélice ou rotor, de son hélice ou rotor(s).

La nacelle est l'élément qui permet d'intégrer le moteur à l'aéronef, elle est constituée :
- de carénages de nacelle (permettant de capoter le moteur, de caréner les rotors, de capter l'air en écoulement en fonctionnement de l'aéronef, de créer un effet de poussée, inverser la poussée sur les systèmes propulsifs, ...) ;
- d'équipements à monter sur le moteur (tel l'habillage moteur regroupant les réseaux électriques, hydrauliques, pneumatiques connus sous l'acronyme EBU de l'anglais « *Engine Build-Up* ») ; et
- des systèmes d'accrochage à l'aéronef.

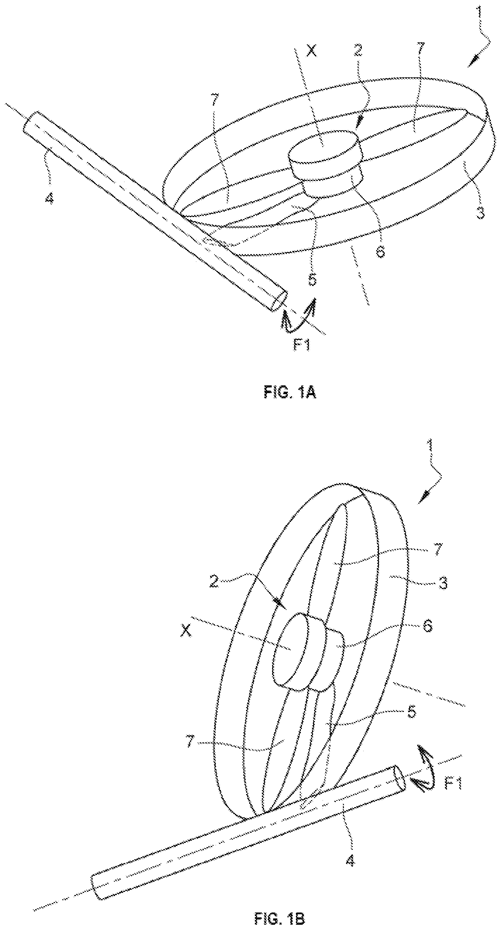

Les figures 1A et 1B illustrent, de manière simplifiée, un premier mode de réalisation d'un système propulsif 1 pour aéronef selon l'invention.

Le système propulsif 1 comprend ici au moins un rotor 2 et un carénage 3 de nacelle s'étendant autour dudit au moins un rotor 2 par rapport à un axe de rotation X du rotor 2. Le carénage 3 fait avantageusement office, par sa forme et ses matériaux, d'écran acoustique. Le système propulsif 1 peut être monté fixe sur l'aéronef. Le système propulsif 1 peut encore être monté sur un arbre de pivotement 4, déporté par rapport à l'axe de rotation X du rotor 2. L'arbre de pivotement 4 est fixé par tout moyen au système propulsif 1, d'une part, et à l'aéronef, d'autre part, et permet l'orientation du système propulsif 1 sur l'aéronef, autorisant le basculement du système propulsif 1 autour de l'arbre de pivotement 4, selon la flèche F1, par l'intermédiaire d'actionneurs connus, entre une position horizontale telle qu'illustrée à la figure 1A, et une position verticale telle qu'illustrée à la figure 1B. Ce basculement permet de faire passer l'aéronef d'un mode classique comme pour un avion, à un mode VTOL ou hélicoptère.

Le rotor 2 du système propulsif 1 est relié à l'aéronef par un mât 5 supportant un moteur 6, par exemple électrique, entraînant en rotation le rotor 2 par l'intermédiaire d'un arbre de puissance, de manière connue en soi. Selon l'exemple illustré nullement limitatif, chaque rotor 2 comprend deux pales 7.

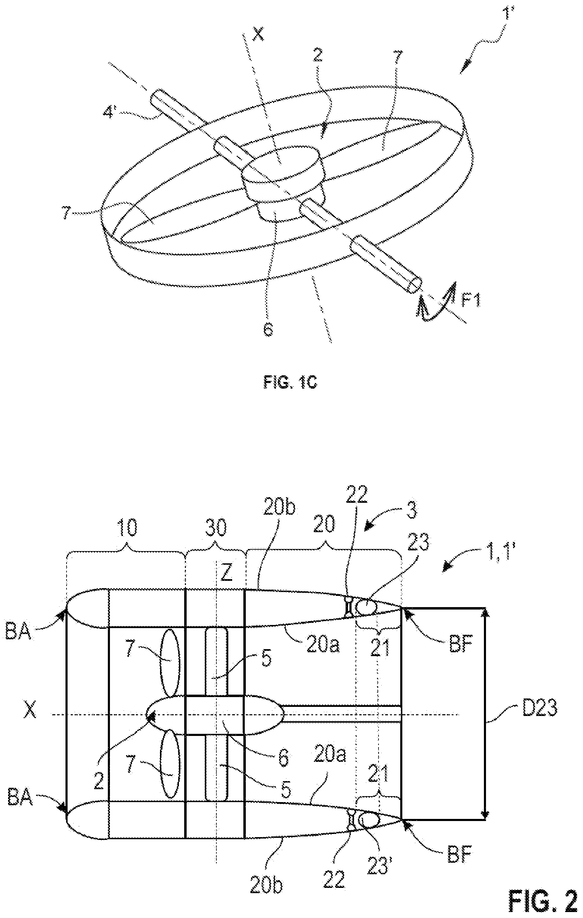

La figure 1C illustre un second mode de réalisation d'un système propulsif 1' pour aéronef selon l'invention dans lequel le système propulsif 1' peut être monté sur un arbre de pivotement 4', traversant le rotor 2 de manière perpendiculaire par rapport à l'axe de rotation X du rotor 2. Le rotor 2 du système propulsif 1' est relié à l'aéronef par un mât 5 supportant un moteur 6, par exemple électrique, entraînant en rotation le rotor 2 par l'intermédiaire d'un arbre de puissance, de manière connue en soi. Selon l'exemple de réalisation représenté, le mât 5 du rotor 2 est confondu avec l'arbre de pivotement 4'.

En référence aux figures 2 à 4, le carénage 3 de nacelle du système propulsif 1, 1' selon l'invention comprend :
- un tronçon amont 10 ;
- un tronçon aval 20 ; et
- un tronçon intermédiaire 30 reliant lesdits tronçons amont 10 et aval 20.

Le tronçon amont 10 forme une section d'entrée (ou dit autrement un bord d'attaque) BA ou entrée d'air du carénage 3 de nacelle.

Le tronçon amont 10 est réalisé dans un matériau pouvant supporter des températures le rendant apte à assurer une fonction d'antigivrage lorsqu'il est approvisionné en air chaud.

Le tronçon intermédiaire 30 est rigide. Il est par exemple réalisé en alliage d'aluminium, en titane chargé 6% aluminium et 4% vanadium (TA6V), ou en composite fibre de carbone à matrice organique. Le tronçon intermédiaire 30 est avantageusement relié au moteur 6 du système propulsif 1, 1' par au moins un mât 5, et, de préférence, par deux mâts 5 de sorte à solidariser mécaniquement le carénage 3 de nacelle au moteur 6 du système propulsif 1, 1'. Le tronçon intermédiaire 30 confère ainsi, par son matériau et sa configuration, une fonction de blindage au système propulsif 1, 1'.

Une extrémité aval 21 du tronçon aval 20 forme une section de sortie (ou dit autrement un bord de fuite) BF ou une sortie d'air du carénage 3 de nacelle.

Le tronçon aval 20 comprend une paroi radialement interne 20a et une paroi radialement externe 20b. Les parois radialement interne 20a et radialement externe 20b du tronçon aval 20 assurent non seulement une fonction structurante du tronçon aval 20 mais également une fonction aérodynamique.

Les parois radialement interne 20a et radialement externe 20b du tronçon aval 20 sont réalisées dans un matériau déformable semi rigide à mémoire de forme. Autrement dit, le matériau constituant les parois radialement interne 20a et radialement externe 20b du tronçon aval 20 est à la fois rigide pour conférer au tronçon aval 20 une forme structurante et souple pour conférer au tronçon aval 20 une possibilité de déformation. Ainsi, les parois radialement interne 20a et radialement externe 20b du tronçon aval 20 sont réalisées dans un matériau apte à réagir sous l'effet d'actionneurs tels que décrits ci-après. Lorsque les parois radialement interne 20a et radialement externe 20b du tronçon aval 20 sont excitées par un ou des actionneurs, les parois se déforment et lorsque la contrainte d'excitation du ou des actionneurs s'arrête, les parois reprennent leur forme initiale. Par exemple, les parois radialement interne 20a et externe 20b sont réalisées en composite ou en un alliage de nickel et titane (encore connu sous le nom « Kiokalloy ») tel que le NiTiNol ou le NiTiCu.

Le matériau à mémoire de forme constituant les parois radialement interne 20a et externe 20b est à sureté intégrée, c'est-à-dire qu'il est tel, que sa position de repos, autrement dit lorsqu'aucun actionneur n'agit sur le matériau à mémoire de forme en vue de sa déformation, correspond à une géométrie naturelle de stockage dudit matériau ou de plus longue durée d'utilisation. Ainsi, en cas de panne de l'actionneur, le matériau à mémoire de forme reprendra sa forme naturelle au repos et le carénage 3 de nacelle reprendra une géométrie sécurisée assurant une poussée axiale pour assurer le bon fonctionnement du système propulsif 1, 1' de l'aéronef.

Les parois radialement interne 20a et externe 20b peuvent également présenter une épaisseur variable axialement et également azimutalement à proximité de pontets de rigidification 22 de sorte à modifier localement l'élasticité de la structure. Il est en outre possible d'optimiser localement les caractéristiques mécaniques du matériau à mémoire de forme constituant les parois radialement interne 20a et externe 20b en fonction des propriétés locales souhaitées le long du tronçon aval 20. Ainsi, il peut être envisagé que le tronçon aval 20 soit constitué d'une pluralité de tronçons de matériaux différents.

Le tronçon aval 20 étant réalisé dans un matériau déformable, semi-rigide lui garantissant une forme structurale rigide de sorte à éviter son affaissement tant au repos que sous l'action d'un écoulement d'air en fonctionnement du système propulsif 1, 1' et permettant ainsi au carénage 3 de nacelle de conserver un profil aérodynamique homogène de sa section de sortie BF. Avantageusement, l'extrémité aval 21 du tronçon aval 20 peut être réalisée en un matériau orthotrope présentant des modules élastiques adéquats.

L'élasticité locale des parois radialement interne 20a et radialement externe 20b du tronçon aval 20 peut varier en fonction de l'épaisseur ou des caractéristiques mécaniques du matériau à mémoire de forme, en fonction des flèches locales souhaitées.

De plus, afin d'assurer un écart sensiblement constant entre les parois radialement interne 20a et radialement externe 20b du tronçon aval 20, des pontets de rigidification 22 sont ménagés angulairement à intervalles réguliers entre ces parois 20a, 20b.

Un but de la présente invention est de pouvoir bénéficier d'un carénage 3 de nacelle du système propulsif 1, 1' dont il est possible de faire varier la section de sortie BF, ainsi que la forme de cette dernière, de manière à orienter la poussée dudit système propulsif.

Ainsi, le tronçon aval 20 comprend des moyens permettant de faire varier la forme de la section de sortie BF.

A cet effet, l'extrémité aval 21 du tronçon aval 20 formant la section de sortie BF du carénage 3 de nacelle comporte une pluralité d'actionneurs 23, 23' pneumatiques ou hydrauliques. Chaque actionneur 23, 23' a une forme générale de portion torique. Les actionneurs 23, 23' s'étendent dans des secteurs angulaires consécutifs différents autour de l'axe X de rotation de sorte que l'ensemble des actionneurs 23, 23' a une forme générale de tore. L'extrémité aval 21 du tronçon aval 20 est donc divisée en portions toriques, chaque portion torique étant associée à un actionneur en forme générale de portion torique.

Chaque actionneur 23, 23' est actionnable indépendamment des autres actionneurs et est configuré pour se déformer dans une direction qui est radiale par rapport à l'axe X de rotation et qui est centrée angulairement par rapport au secteur angulaire sur lequel il s'étend, sous l'effet d'une pression de commande prédéterminée. Ainsi, chaque actionneur 23, 23' est configuré pour déformer radialement à l'axe X la portion torique de l'extrémité aval du tronçon aval à laquelle il est associé.

Pour cela, chaque actionneur 23, 23' est relié à un dispositif automatique pneumatique ou hydraulique connu en soi (non représenté) permettant d'introduire ou d'extraire un fluide dans ou à partir de cet actionneur 23, 23' par application d'une pression de commande adaptée selon la configuration désirée pour le carénage 3 de nacelle pour obtenir la composante de poussée latérale voulue. En particulier, le dispositif automatique pneumatique ou hydraulique envoie ou extrait le fluide dans un actionneur 23, 23' indépendamment des autres actionneurs.

De préférence et avantageusement, chaque actionneur 23, 23' est réalisé en matériau élastique rigidifié radialement, par exemple par inclusion de fibres. Par exemple, il est réalisé en matériau polymère incorporant un dispositif extérieur ou des inclusions le rigidifiant dans la direction radiale.

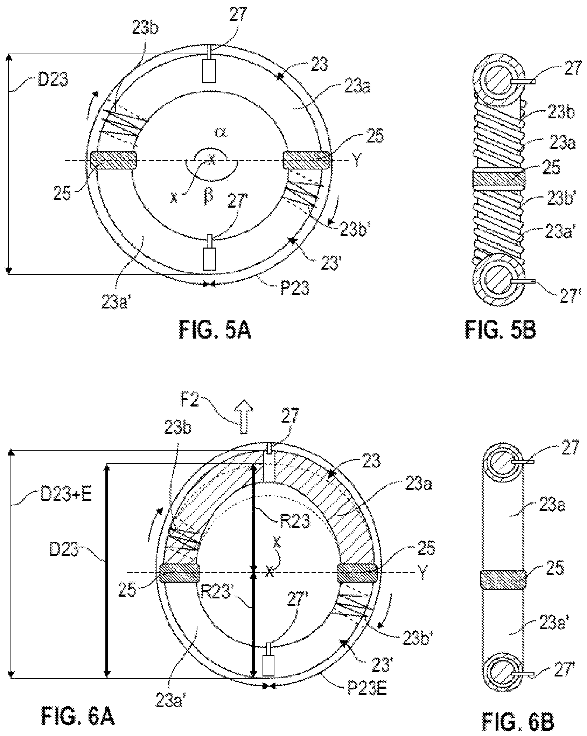

Selon l'exemple de réalisation illustré aux figures 5A à 7B, le système propulsif 1, 1' comporte deux actionneurs 23, 23' de forme semi-toriques : un premier actionneur 23 s'étendant dans une première partie (la partie haute sur les figures) de l'extrémité aval 21 du tronçon aval 20, et un second actionneur 23' s'étendant dans une seconde partie (la partie basse sur les figures) de l'extrémité aval 21 du tronçon aval 20. Sur les figures, les actionneurs sont présentés dans la partie supérieure (haute) et la partie inférieure (basse) du tronçon aval, mais peuvent bien entendu être intégrés dans des secteurs angulaires différents (par exemple à droite et à gauche sur les figures), ces secteurs angulaires dépendant de l'orientation du système propulsif lors de son installation sur l'aéronef. Les actionneurs 23, 23' sont disposés de sorte à former un tore. Bien entendu, l'invention n'est nullement limitée à cet exemple de réalisation, et le système propulsif 1, 1' peut comporter plus d'actionneurs.

Sur ces figures 5A à 7B, chaque actionneur 23, 23' comprend une vessie 23a, 23a' de forme générale semi-torique en matériau souple enchâssée dans un ressort spiral 23b, 23b'. Chaque ressort spiral 23b, 23b' est encastré à une extrémité dans un support rigide 25 qui a une fonction de structure. Chaque ressort spiral 23b, 23b' est ainsi maintenu solidaire du support rigide 25. Le ressort spiral 23b, 23b' a pour fonction de limiter l'expansion radiale de la section de la vessie 23a, 23a'. Chaque vessie 23a, 23a' est liée à chacune de ses extrémités au support rigide 25. Il y a ainsi une solidarisation de l'actionneur 23, 23' sur le support rigide 25. Une autre mode de réalisation pourrait être l'utilisation d'un matériau orthotrope présentant un module élastique plus important dans une direction radiale que dans une direction azimutale.

Chaque vessie 23a, 23a' comprend une valve d'entrée 27, 27' configurée pour recevoir la pression de commande prédéterminée. La valve d'entrée 27, 27' peut par exemple être une électrovalve.

Chaque actionneur 23, 23' est configuré de sorte que, lorsqu'il est soumis à une augmentation de pression, cela se traduit par une déformation locale, c'est-à-dire par une expansion E radiale et locale, du tore formé par l'ensemble des actionneurs. La section de sortie du carénage est donc dissymétrique, et sa forme résulte des caractéristiques mécaniques de la structure soumise à la poussée de la vessie 23a, 23a'. Lorsqu'un actionneur 23, 23' est activé, la dimension selon l'axe X de la section torique de l'actionneur activé varie peu en comparaison avec l'expansion radiale, dont la résultante crée une flèche locale de la structure du côté de l'actionneur activé.

La figure 2 représente un système propulsif 1, 1' selon l'invention dont le carénage 3 de nacelle est montré en position neutre, c'est-à-dire poussée axiale pure. Les figures 5A et 5B représentent les actionneurs 23, 23' dans cette position neutre. Chaque actionneur 23, 23' est soumis à une pression de commande sensiblement égale à une pression ambiante entre les parois radialement interne 20a et externe 20b du tronçon aval 20 du carénage 3 de nacelle. La déformation locale des actionneurs 23, 23' est alors nulle. L'ensemble des actionneurs 23, 23' forme un tore centré sur l'axe X.

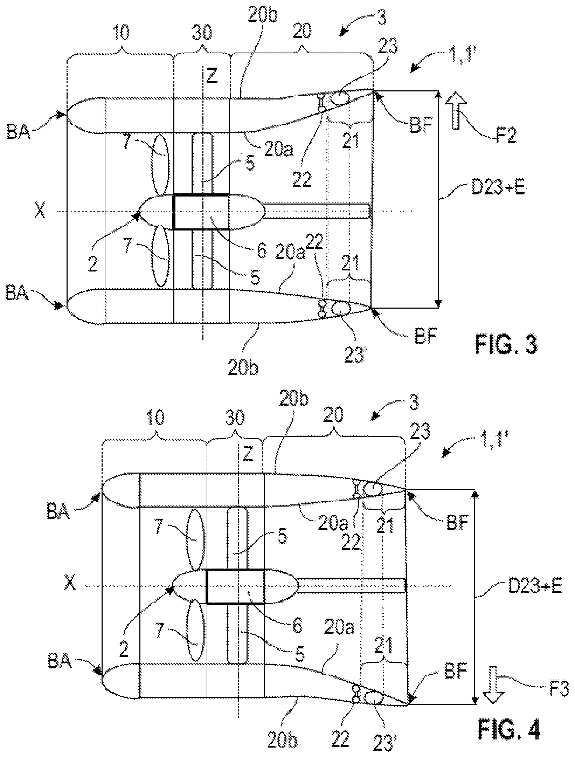

La figure 3 représente un système propulsif 1, 1' selon l'invention dont le carénage 3 de nacelle est montré dans une position où le flux est dévié vers le haut. Les figures 6A et 6B représentent les actionneurs 23, 23' dans cette position de poussée dissymétrique vers le bas. Une commande pour créer un déplacement latéral de la nacelle vers le bas nécessite de déformer la section de sortie de la nacelle vers le haut, de façon à créer une force orientée du haut vers le bas. L'actionneur 23 est actionné pour déformer radialement la vessie 23a. Une consigne de pression est calculée en fonction de l'entrée de la commande de vol, puis est envoyée, via la valve 27, dans l'admission de la vessie 23a. La vessie 23a est déformée dans une direction radiale (flèche F2 sur les figures 3 et 6A) par rapport à l'axe X de rotation et centrée angulairement par rapport au secteur angulaire α sur lequel l'actionneur 23 s'étend, c'est-à-dire verticalement et vers le haut sur la figure 6A. L'actionneur 23 est donc soumis à une pression de commande supérieure à la pression ambiante entre les parois supérieures radialement interne 20a et externe 20b du tronçon aval 20 du carénage 3 de nacelle. L'actionneur 23' est quant à lui soumis à une pression de commande sensiblement égale à une pression ambiante entre les parois inférieures radialement interne 20a et externe 20b du tronçon aval 20 du carénage 3 de nacelle.

Autrement dit, l'actionneur 23' est en position de repos. Ainsi, le rayon externe R23' du semi-tore formé par l'actionneur 23' est égal à la moitié de la dimension radiale D23 de l'ensemble des actionneurs 23, 23' au repos. Toutefois, la dimension radiale du semi-tore formé par l'actionneur 23 est égale à la somme du rayon externe R23 de l'actionneur 23 au repos et de l'expansion E. L'actionneur 23' étant au repos, conserve sa forme semi-torique, tandis que l'actionneur 23, étant activé, se déforme (en une forme semi-elliptique, par exemple, comme sur la figure 6A). L'ensemble des actionneurs 23, 23' forme une couronne non axisymétrique, dont une partie (ici la partie supérieure) présente une déformation radiale.

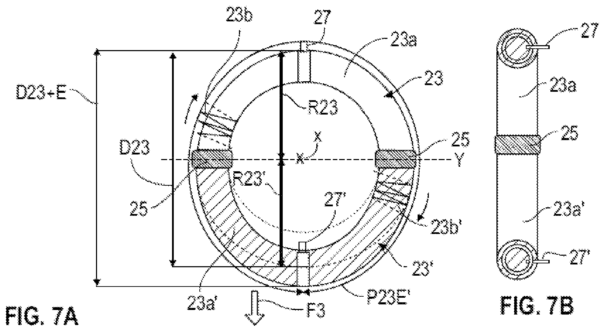

La figure 4 représente un système propulsif 1, 1' selon l'invention dont le carénage 3 de nacelle est montré dans une position où le flux est dévié vers le bas. Les figures 7A et 7B représentent les actionneurs 23, 23' dans cette position de poussée dissymétrique vers le haut. Une commande pour créer un déplacement latéral de la nacelle vers le haut nécessite de déformer la section de sortie de la nacelle vers le bas, de façon à créer une force orientée du bas vers le haut. L'actionneur 23' est actionné pour déformer radialement la vessie 23a'. Une consigne de pression est calculée en fonction de l'entrée de la commande de vol, puis est envoyée, via la valve 27', dans l'admission de la vessie 23a'. La vessie 23a' est déformée dans une direction radiale (flèche F3 sur les figures 4 et 7A) par rapport à l'axe X de rotation et centrée angulairement par rapport au secteur angulaire β sur lequel l'actionneur 23' s'étend, c'est-à-dire verticalement et vers le bas sur la figure 7A. L'actionneur inférieur 23' est donc soumis à une pression de commande supérieure à la pression ambiante entre les parois inférieures radialement interne 20a et externe 20b du tronçon aval 20 du carénage 3 de nacelle. L'actionneur 23 est quant à lui soumis à une pression de commande sensiblement égale à une pression ambiante entre les parois supérieures radialement interne 20a et externe 20b du tronçon aval 20 du carénage 3 de nacelle. Autrement dit, l'actionneur 23 est en position de repos. Ainsi, le rayon externe R23 du semi-tore formé par l'actionneur 23 est égal à la moitié de la dimension radiale D23 de l'ensemble des actionneurs 23, 23' au repos. Toutefois, la dimension radiale du semi-tore formé par l'actionneur 23' est égale à la somme du rayon externe R23' de l'actionneur 23' au repos et de l'expansion E. L'actionneur 23 étant au repos, conserve sa forme semi-torique, tandis que l'actionneur 23', étant activé, se déforme (en une forme semi-elliptique, par exemple, comme sur la figure 7A). L'ensemble des actionneurs 23, 23' forme une couronne non axisymétrique, dont une partie (ici la partie inférieure) présente une déformation radiale.

L'augmentation progressive de la pression de commande induite par le dispositif automatique pneumatique ou hydraulique fait varier progressivement la forme et les dimensions de la section de sortie BF. En particulier, il y a une déformation, radialement à l'axe X et localement, des parois radialement interne 20a et radialement externe 20b en matériau déformable à mémoire de forme du tronçon aval 20 associées à l'actionneur. Ceci fait, par conséquent, varier les dimensions et la forme de la section de sortie BF, qui passe ainsi d'une dimension radiale minimale D23 et d'une forme circulaire dans la configuration en mode poussée axiale telle qu'illustrée à la figure 2 à une dimension radiale D23 + E supérieure à la dimension radiale minimale D23, avec une déformation de la section de sortie BF dans au moins une direction radiale dans la configuration en mode poussée dissymétrique du carénage 3 de nacelle telle qu'illustrée aux figures 3 et 4.

De même, la réduction progressive de la pression de commande induite par le dispositif automatique pneumatique ou hydraulique fait passer progressivement le carénage 3 de nacelle d'une configuration en mode poussée dissymétrique telle qu'illustrée aux figures 3 et 4 à une configuration en mode poussée axiale telle qu'illustrée à la figure 2.

Le passage de la configuration de la figure 5A à la configuration de la figure 6A ou de la figure 7A du tronçon aval 20 du carénage 3 de nacelle, et inversement, se fait en continu en fonction de la pression de commande induite par le dispositif automatique pneumatique ou hydraulique, les pontets de rigidification 22 assurant un écart sensiblement constant entre les parois radialement interne 20a et radialement externe 20b du tronçon aval 20 lors des changements de configuration de la section (dimensions et forme) de sortie BF (autrement dit de la section de sortie) du carénage 3 de nacelle.

L'invention a principalement été décrite pour un système propulsif comportant deux actionneurs de forme semi-torique, mais le système propulsif peut bien entendu comporter plus d'actionneurs en forme de portion torique au repos.

## Revendications

1. Système propulsif (1, 1') pour un aéronef, comprenant au moins un rotor (2) et un carénage (3) de nacelle s'étendant autour dudit au moins un rotor (2) par rapport à un axe (X) de rotation dudit rotor (2), ce carénage (3) de nacelle comprenant un tronçon amont (10) formant une section d'entrée (BA) du carénage (3) de nacelle et un tronçon aval (20) dont une extrémité aval (21) forme une section de sortie (BF) du carénage (3) de nacelle ; le tronçon aval (20) comprenant une paroi radialement interne (20a) et une paroi radialement externe (20b) réalisées dans un matériau déformable à mémoire de forme, et **caractérisé en ce que** l'extrémité aval (21) formant la section de sortie (BF) comporte une pluralité d'actionneurs (23, 23') pneumatiques ou hydrauliques, les actionneurs (23, 23') s'étendant dans des secteurs angulaires consécutifs différents autour dudit axe (X) de rotation, chaque actionneur (23, 23') étant actionnable indépendamment des autres actionneurs et étant configuré pour se déformer dans une direction qui est radiale par rapport à l'axe (X) de rotation et qui est centrée angulairement par rapport au secteur angulaire sur lequel il s'étend sous l'effet d'une pression de commande prédéterminée.

2. Système propulsif (1, 1') selon la revendication 1, dans lequel chaque actionneur (23, 23') a une forme générale de portion torique, les actionneurs (23, 23') s'étendant dans des secteurs angulaires consécutifs différents autour dudit axe (X) de rotation de sorte que l'ensemble des actionneurs (23, 23') a une forme générale de tore.

3. Système propulsif (1, 1') selon l'une des revendications 1 ou 2, dans lequel chaque actionneur (23, 23') est réalisé en matériau élastique rigidifié radialement incluant des fibres.

4. Système propulsif (1, 1') selon l'une des revendications 1 ou 2, dans lequel chaque actionneur (23, 23') comprend une vessie (23a, 23a') en forme générale de portion torique en matériau souple enchâssée dans un ressort spiral (23b, 23b').

5. Système propulsif (1, 1') selon la revendication 4, dans lequel chaque actionneurs (23, 23') est encastré à une extrémité dans un support rigide (25).

6. Système propulsif (1, 1') selon l'une des revendications 4 ou 5, dans lequel chaque vessie (23a, 23a') comprend une valve d'entrée (27, 27') configurée pour recevoir la pression de commande prédéterminée.

7. Système propulsif (1, 1') selon la revendication 6, dans lequel ladite valve d'entrée (27, 27') est une électrovalve.

8. Système propulsif (1, 1') selon l'une des revendications précédentes, dans lequel la pluralité d'actionneurs (23, 23') comporte au moins deux actionneurs ayant une forme générale semi-torique.

9. Système propulsif (1, 1') selon l'une des revendications précédentes, comprenant en outre des pontets (22) de rigidification reliant les parois radialement interne (20a) et radialement externe (20b) du tronçon aval (20).

10. Système propulsif (1, 1') selon l'une des revendications précédentes, dans lequel le carénage de nacelle comprend également un tronçon amont (10) formant une section d'entrée du carénage de nacelle et un tronçon intermédiaire (30) reliant les tronçons amont (10) et aval (20), et dans lequel le tronçon intermédiaire (30) est rigide et est relié par au moins un mât (5) à un moteur (6) du système propulsif (1, 1').

11. Aéronef **caractérisé en ce qu'**il comporte au moins un système propulsif (1, 1') selon l'une quelconque des revendications précédentes, le système propulsif (1, 1') étant monté pivotant sur l'aéronef par l'intermédiaire d'un arbre de pivotement (4, 4') déporté ou traversant par rapport au rotor (2).

## Patentansprüche

1. Antriebssystem (1,1') für ein Flugzeug, umfassend mindestens einen Rotor (2) und eine Gondelverkleidung (3), die sich um den mindestens einen Rotor (2) in Bezug auf eine Drehachse (X) des Rotors (2) erstreckt, wobei diese Gondelverkleidung (3) einen stromaufwärtigen Teilabschnitt (10) umfasst, der einen Eintrittsabschnitt (BA) der Gondelverkleidung (3) bildet, und einen stromabwärtigen Teilabschnitt (20), bei dem ein stromabwärtiges Ende (21) einen Austrittsabschnitt (BF) der Gondelverkleidung (3) bildet, wobei der stromabwärtige Teilabschnitt (20) eine radial innere Wand (20a) und eine radial äußere Wand (20b) umfasst, die in einem verformbarem Material mit Formgedächtnis bildet sind, und **dadurch gekennzeichnet, dass** das stromabwärtige Ende (21), das den Austrittsabschnitt (BF) bildet, eine Vielzahl von pneumatischen oder hydraulischen Aktuatoren (23, 23') umfasst, wobei die Aktuatoren (23, 23') sich in unterschiedlichen aufeinanderfolgenden Winkelsektoren um die Drehachse (X) erstrecken, wobei jeder Aktuator (23, 23') unabhängig von den anderen Aktuatoren betätigbar ist und konfiguriert ist, um sich unter der Einwirkung eines vorbestimmten Steuerdrucks in einer Richtung zu verformen, die in Bezug auf die Drehachse (X) radial ist und die in Bezug auf den Winkelsektor, auf dem er sich erstreckt, winkelig zentriert ist.

2. Antriebssystem (1,1') nach Anspruch 1, wobei jeder Aktuator (23, 23') eine allgemeine Form eines Teils eines Torus aufweist, wobei sich die Aktuatoren (23, 23') derart in unterschiedlichen aufeinanderfolgenden Winkelsektoren um die Drehachse (X) erstrecken, dass die Gesamtheit der Aktuatoren (23,23') eine allgemeine Form eines Torus bilden.

3. Antriebssystem (1,1') nach einem der Ansprüche 1 oder 2, wobei jeder Aktuator (23, 23') aus einem radial versteiften elastischen Material hergestellt ist, das Fasern beinhaltet.

4. Antriebssystem (1,1') nach einem der Ansprüche 1 oder 2, wobei jeder Aktuator (23, 23') eine Blase (23a, 23a') in der allgemeinen Form eines Teils eines Torus aus einem nachgiebigen Material umfasst, die in einer Spiralfeder (23b, 23b') eingefasst ist.

5. Antriebssystem (1,1') nach Anspruch 4, wobei jeder Aktuator (23, 23') an einem Ende in einem steifen Träger (25) eingefügt ist.

6. Antriebssystem (1,1') nach einem der Ansprüche 4 oder 5, wobei jede Blase (23a, 23a') ein Eingangsventil (27,27') umfasst, das konfiguriert ist, um den vorbestimmten Steuerdruck aufzunehmen.

7. Antriebssystem (1,1') nach Anspruch 6, wobei das Eingangsventil (27, 27') ein Elektroventil ist.

8. Antriebssystem (1,1') nach einem der vorstehenden Ansprüche, wobei die Vielzahl von Aktuatoren (23, 23') mindestens zwei Aktuatoren umfasst, die eine allgemeine Form eines Halbtorus aufweisen.

9. Antriebssystem (1,1') nach einem der vorstehenden Ansprüche, weiter umfassend Versteifungsstege (22), die die radial innere (20a) und radial äußere Wand (20b) des stromabwärtigen Teilabschnitts (20) verbinden.

10. Antriebssystem (1,1') nach einem der vorstehenden Ansprüche, wobei die Gondelverkleidung ebenfalls einen stromaufwärtigen Teilabschnitt (10) umfasst, der einen Eingangsabschnitt der Gondelverkleidung bildet, und einen mittleren Teilabschnitt (30), der den stromaufwärtigen (10) und stromabwärtigen Teilabschnitt (20) verbindet, und wobei der mittlere Teilabschnitt (30) steif ist und über mindestens einen Mast (5) mit einem Motor (6) des Antriebssystems (1,1') verbunden ist.

11. Flugzeug, **dadurch gekennzeichnet, dass** es mindestens ein Antriebssystem (1,1') nach einem der vorstehenden Ansprüche umfasst, wobei das Antriebssystem (1,1') mittels einer in Bezug auf den Rotor (2) versetzten oder durchgehenden Schwenkwelle (4, 4') schwenkbar am Flugzeug montiert ist.

## Claims

1. A propulsion system (1, 1') for an aircraft, comprising at least one rotor (2) and a nacelle fairing (3) extending around said at least one rotor (2) with respect to an axis (X) of rotation of said rotor (2), this nacelle fairing (3) comprising an upstream section (10) forming an inlet cross-section (BA) of the nacelle fairing (3) and a downstream section (20), a downstream end (21) of which forms an outlet cross-section (BF) of the nacelle fairing (3); the downstream section (20) comprises a radially internal wall (20a) and a radially external wall (20b) made of a deformable shape-memory material, and **characterised in that** the downstream end (21) forming the outlet cross-section (BF) comprises a plurality of pneumatic or hydraulic actuators (23, 23'), the actuators (23, 23') extending in different consecutive angular sectors about said axis (X) of rotation, each actuator (23, 23') being actuatable independently of the other actuators and being configured to deform in a direction which is radial with respect to the axis (X) of rotation and which is angularly centred with respect to the angular sector over which it extends under a predetermined command pressure.

2. The propulsion system (1, 1') according to claim 1, wherein each actuator (23, 23') has a general shape of a toroidal segment, the actuators (23, 23') extending in different consecutive angular sectors about said axis (X) of rotation so that the set of the actuators (23, 23') has a general torus shape.

3. The propulsion system (1, 1') according to any of claims 1 or 2, wherein each actuator (23, 23') is made of radially stiffened elastic material including fibres.

4. The propulsion system (1, 1') according to any of claims 1 or 2, wherein each actuator (23, 23') comprises a bladder (23a, 23a') in the general form of toroidal segment of flexible material encased in a spiral spring (23b, 23b').

5. The propulsion system (1, 1') of claim 4, wherein each actuator (23, 23') is embedded at one end in a rigid support (25).

6. The propulsion system (1, 1') according to any of claims 4 or 5, wherein each bladder (23a, 23a') comprises an inlet valve (27, 27') configured to receive the predetermined command pressure.

7. The propulsion system (1, 1') according to claim 6, wherein said inlet valve (27, 27') is a solenoid valve.

8. The propulsion system (1, 1') according to any of the preceding claims, wherein the plurality of actuators (23, 23') comprises at least two actuators having a general semitoroidal shape.

9. The propulsion system (1, 1') according to one of the preceding claims, further comprising stiffening bridges (22) connecting the radially internal (20a) and radially external (20b) walls of the downstream section (20).

10. The propulsion system (1, 1') according to one of the preceding claims, wherein the nacelle fairing also comprises an upstream section (10) forming an inlet cross-section of the nacelle fairing and an intermediate section (30) connecting the upstream (10) and downstream (20) sections, and wherein the intermediate section (30) is rigid and is connected by at least one mast (5) to an engine (6) of the propulsion system (1, 1').

11. An aircraft **characterised in that** it comprises at least one propulsion system (1, 1') according to any one of the preceding claims, the propulsion system (1, 1') being mounted so as to pivot on the aircraft by means of a pivot shaft (4, 4') that is offset from or passes through the rotor (2).
